# EUROPÄISCHE PATENTANMELDUNG

(11) **EP 2 846 428 A1**
(43) Veröffentlichungstag der Anmeldung: **11.03.2015**
(21) Anmeldenummer: 13183230.5
(22) Anmeldetag: 05.09.2013
(51) Int. Cl.: H02G 3/06

(54) **Winkelelement für Kabelbahnen und Kabelbahn**

(71) Anmelder: Zurecon AG, 9053 Teufen AR (CH)
(72) Erfinder: Pfluger, Gerd, 4625 Oberbuchsiten (CH)
(74) Vertreter: Rutz & Partner

(57) **Zusammenfassung**

Das Winkelelement (1), das der Verbindung von unterschiedlich zueinander ausgerichteten Kabelbahnelementen (21) einer Kabelbahn (2) dient, umfasst zwei miteinander verbundene und vorzugsweise senkrecht zueinander ausgerichtete erste und zweite Anschlussteile (11A, 11B), die aus Blech gefertigte und durch ein Bodenteil (112) aus Metallblech oder Metallprofilen miteinander verbundene Seitenwände (111) aufweisen und die je mit einem anschliessenden Kabelbahnelement (21) der Kabelbahn (2) verbindbar sind. Erfindungsgemäss sind das erste Anschlussteil (11A) durch ein erstes Winkelsegment (12A) und das zweite Anschlussteil (11B) durch ein zweites Winkelsegment (12B) mit der zugewandten Seite eines Mittelteils (11C) verbunden, wobei die beiden Anschlussteile (11A, 11B) und das Mittelteil (11C) Kabelbahnsegmente mit zumindest annähernd gleichem Querschnitt und je einer zugehörigen Längsachse (11Ax, 11Bx, 11Cx) bilden und eingangsseitig und ausgangsseitig senkrecht zur Längsachse (11Ax, 11Bx, 11Cx) geschnitten sind. Die aus Blech gefertigten und zumindest annähernd identischen Winkelsegmente (12A, 12B) umfassen ein trapezförmiges Bodenteil (122), das einen Teilwinkel von vorzugsweise 45° einschliessende Schenkelseiten (122A, 122B) und eine längere erste Grundseite (122C) und eine kürzere zweite Grundseite (122D) aufweisen, an die zugehörige Seitenwände (121, 123) einstückig anschliessen.

## Beschreibung

Die Erfindung betrifft ein Winkelelement für Kabelbahnen und eine Kabelbahn mit wenigstens einem solchen Winkelelement.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in metallene Kabelbahnen gelegt und so beispielsweise von einem Schaltfeld oder einer Zentrale zu den Verbrauchern geführt. Kabelbahnen dieser Art, die aus einzelnen Abschnitten zusammengesetzt werden, sind beispielsweise aus [1], Produktkatalog der LANZ OENSINGEN AG, Juni 2009, bekannt.

Derartige Kabelbahnen umfassen zwei aus Blech gefertigte Seitenwände, die durch einen Kabelbahnboden miteinander verbunden sind. Der Kabelbahnboden besteht entweder aus einem Blech, das vorzugsweise einstückig mit den Seitenwänden verbunden ist, oder aus Querprofilen beispielsweise mit einem C-Profil, die beidseitig mit der Unterseite einer der Seitenwände verbunden sind, die vorzugsweise ein L-Profil aufweisen.

Für das Tragen hoher Lasten ist die Festigkeit der Seitenwände von entscheidender Bedeutung. Zur Erhöhung der Stabilität der Seitenwände und somit der Tragfähigkeit der Kabelbahn wird üblicherweise die Oberseite der Seitenwände nach aussen gebogen, wodurch gleichzeitig eine nach oben ragende Kante vermieden wird.

Zur Gewährleistung der Stapelbarkeit der Kabelbahnen sind die Seitenwände nicht senkrecht zum Kabelbahnboden ausgerichtet, sondern etwa um 95° dazu leicht nach aussen geneigt.

Zur Verbindung der Kabelbahnabschnitte sind Verbindungsvorrichtungen verwendbar, die ebenfalls in [1] beschrieben sind.

Für die genannten Kabelbahnen sind in [1] Winkelelemente gezeigt, die es erlauben, ein erstes und ein zweites Kabelbahnelement miteinander zu verbinden, die senkrecht zueinander ausgerichtet sind. Auf diese Weise können bei der Kabelführung entlang einem Gebäude bedarfsweise die erforderlichen Richtungsänderungen vollzogen werden. Diese Winkelelemente weisen Seitenwände auf, damit die Stabilität der Kabelbahn auch im Kurvenbereich gewährleistet bleibt. Winkelelemente für Kabelbahnen mit einem Blechboden sind ferner aus [2], GB2267605A, und Winkelelemente mit einem Kabelbahnboden aus Querprofilen sind ferner aus [3], US6926236B2, bekannt.

Im ersten Fall werden die Winkelelemente vorzugsweise aus einem einzigen Blechstück gebogen. Ein entsprechend zugeschnittenes Blechstück ist daher in zahlreichen Arbeitsschritten zu biegen, um ein solches Winkelelement zu fertigen. Obwohl das Winkelelement aus nur einem Blech mit relativ geringem Materialaufwand hergestellt werden kann, resultiert aufgrund der zahlreichen Biegevorgänge ein entsprechend hoher Fertigungsaufwand.

Bei der Fertigung von Winkelelementen für Kabelbahnen mit Querprofilen sind die Seitenwände der Winkelelemente entsprechend zu biegen. Die Querprofile werden in der Folge voneinander beabstandet radial zum Kurvenverlauf ausgerichtet und mit den gekrümmten Seitenwänden verbunden. Auch in diesem Fall sind zahlreiche Arbeitsschritte erforderlich, die zu einem hohen Fertigungsaufwand führen.

Ferner ist zu beachten, dass das in eine mit einem Winkelelement versehene Kabelbahn eingelegte Kabel beim Nachziehen gegen die radial innen liegende Seitenwand des Winkelelements gezogen und daran entlang geführt wird. Bei der Fertigung der Winkelelemente ist daher darauf zu achten, dass Kanten an der radial innenliegenden Seitenwand vermieden werden, welche die Kabel verletzen könnten.

Der vorliegenden Erfindung liegt daher die Aufgabe zugrunde, ein verbessertes Winkelelement für Kabelbahnen zu schaffen, die ein Bodenteil und aus Blech gefertigte Seitenwände aufweisen. Ferner ist eine mit einem solchen Winkelelement versehene verbesserte Kabelbahn zu schaffen.

Insbesondere ist ein Winkelelement zu schaffen, das mit geringem Aufwand und geringen Kosten gefertigt werden kann.

Das Winkelelement soll vorzugsweise ohne zusätzliche Verbindungselemente, wie Schrauben oder Bolzen, vorteilhaft und einfach aufgebaut sein.

Weiterhin sollen mit dem Winkelelement vom Anwender gewünschte Funktionen mit minimalem Aufwand realisierbar sein.

Das Winkelelement soll ferner mit minimalen Abmessungen gelagert und transportiert werden können.

Mittels des Winkelelements sollen zwei beispielsweise rechtwinklig zueinander ausgerichtete Kabelbahnelemente stabil miteinander verbunden werden können. Unter Last sollen ein Durchbiegen der resultierenden Kabelbahn sowie ein gegenseitiges Verdrehen der Kabelbahnelemente vermieden werden.

Die Lagerung der Kabel in erfindungsgemässen Kabelbahnen soll besonders schonend realisiert werden. Weiterhin soll Kabel nachgezogen werden können, ohne dass es beschädigt oder aus der Kabelbahn gezogen wird. Die Kabel sollen in der Kabelbahn derart gelagert und verschoben werden können, ohne dass Verletzungen des Kabelmantels oder Knickstellen auftreten. Insbesondere soll verhindert werden, dass ein vorgeschriebener Biegeradius unterschieden wird.

Diese Aufgabe wird mit einem Winkelelement, welches die in Anspruch 1 angegebenen Merkmale aufweist, und mit einer Kabelbahn gelöst, welche die in Anspruch 14 angegebenen Merkmale aufweist. Vorteilhafte Ausgestaltungen der Erfindung sind in weiteren Ansprüchen angegeben.

Das Winkelelement, das der Verbindung von unterschiedlich zueinander ausgerichteten Kabelbahnelementen einer Kabelbahn dient, umfasst zwei miteinander verbundene und vorzugsweise senkrecht zueinander ausgerichtete erste und zweite Anschlussteile, die aus Blech gefertigte und durch ein Bodenteil aus Metallblech oder Metallprofilen miteinander verbundene Seitenwände aufweisen und die je mit einem anschliessenden Kabelbahnelement der Kabelbahn verbindbar sind.

Erfindungsgemäss sind das erste Anschlussteil durch ein erstes Winkelsegment und das zweite Anschlussteil durch ein zweites Winkelsegment mit der zugewandten Seite eines Mittelteils verbunden, wobei die beiden Anschlussteile und das Mittelteil
a) Kabelbahnsegmente mit zumindest annähernd gleichem Querschnitt und je einer zugehörigen Längsachse bilden und
b) eingangsseitig und ausgangsseitig senkrecht zur Längsachse geschnitten sind.

Die aus Blech gefertigten und zumindest annähernd identischen Winkelsegmente umfassen ein trapezförmiges Bodenteil, das einen Teilwinkel von vorzugsweise 45° einschliessende Schenkelseiten und eine längere erste Grundseite und eine kürzere zweite Grundseite aufweisen, an die zugehörige Seitenwände einstückig anschliessen.

Eine erfindungsgemässe Kabelbahn umfasst ein erfindungsgemässes Winkelelement sowie daran anschliessende Kabelbahnelemente. Anhand des Winkelelements können innerhalb der Kabelbahn somit Richtungsänderungen von beispielsweise 90° vollzogen werden, wie sie die Infrastruktur von Gebäuden typischerweise verlangt. Sofern andere Richtungsänderungen gewünscht sind, werden die Teilwinkel entsprechend grösser oder kleiner gewählt.

Das erfindungsgemässe Winkelelement kann aufgrund der vorteilhaften Ausgestaltung mit minimalem Aufwand hergestellt werden. Die beiden Anschlussteile und das Mittelteil können sequenziell von einem Kabelbahnelement abgeschnitten werden. In besonders bevorzugten Ausgestaltungen sind die beiden Anschlussteile und das Mittelteil somit praktisch identisch zu den Kabelbahnelementen ausgestaltet, die an das Winkelelement angeschlossen werden. Die Verbindung eines Anschlussteils mit einem Kabelbahnelement erfolgt somit in derselben Weise, wie die Verbindung von zwei Kabelbahnelementen.

Aufgrund des Schnitts in einer Ebene senkrecht zur Längsachse der Anschlussteile und des Mittelteils bzw. in einer Ebene senkrecht zur Längsachse des als Ausgangsmaterial dienenden Kabelbahnelements können die Anschlussteile und das Mittelteil mit minimalem Aufwand in der gewünschten Länge bereitgestellt werden. Die beiden Anschlussteile können identische oder bedarfsweise unterschiedliche Längen aufweisen. Eine Anpassung an Wünsche des Anwenders ist daher praktisch ohne zusätzlichen Aufwand möglich.

Somit reduziert sich der Fertigungsaufwand der Winkelelemente auf die Bereitstellung der Winkelelemente, die jedoch einfach ausgestaltet sind und daher ebenfalls nur einen geringen Fertigungsaufwand verursachen. Die Winkelsegmente sind mit der entsprechenden Abwicklung aus einem Blech auszuschneiden, was mit beliebigen Trennverfahren, z.B. Laserschneiden oder Wasserstrahlschneiden, leicht vollzogen werden kann. In der Folge sind lediglich die Seitenwände und gegebenenfalls daran vorgesehene Flanschelemente zu biegen. Da vorzugsweise identische Winkelelemente verwendet werden, halbiert sich deren Komplexität entsprechend. Die Biegevorgänge können mit einfachen Werkzeugen vollzogen werden.

In vorzugsweisen Ausgestaltungen ist die im Winkelelement radial innenliegende Seitenwand des Winkelelements gerundet und weist beispielsweise in Form einer Zylinderwand auf. Durch diese Formung der Seitenwand, die einfach eingeprägt werden kann, kann die Bildung von Kanten an der radial innenliegenden Seitenwand der Kabelbahn vermieden werden. Beim Nachziehen der Kabel werden Verletzungen des Kabelmantels somit vermieden.

Alternativ oder zusätzlich wird die radial innenliegende Seitenwand des Winkelelements vorzugsweise eingangsseitig und ausgangsseitig mit senkrecht ausgerichteten Kabelschwellen versehen. Durch die vorzugsweise wellenförmig ausgestalteten Kabelschwellen wird das Kabel im Übergangsbereich von Abschlusskanten abgehoben, weshalb auch dadurch Verletzungen des Kabelmantels beim Nachziehen der Kabel vermieden werden.

Weiterhin können auch im Bodenteil des Winkelsegments Kabelschwellen eingangsseitig und ausgangsseitig vorteilhaft vorgesehen werden. Diese Formteile können durch einfache Prägevorgänge realisiert werden.

Zur Verbindung der genannten Teile des Winkelelements werden die Winkelsegmente vorzugsweise mit Verbindungselementen, wie Flanschelementen versehen, welche die Seitenwände und/oder das Bodenteil des Anschlussteils und des Mittelteils vorzugsweise überlappen und mit diesen beispielsweise durch Schweissen, Nieten, Toxen oder Schrauben verbunden werden.

In besonders bevorzugten Ausgestaltungen sind die an den beiden Winkelelementen vorgesehenen Verbindungselemente, vorzugsweise Flanschelemente oder Zungen, in Aufnahmeelemente, vorzugsweise Laschen einschiebbar, die am ersten Anschlussteil und am Mittelteil vorgesehen sind. Grundsätzlich muss diese vorteilhafte Art der Verbindung der Teile des Winkelelements nicht gesichert werden. Durch entsprechende Dimensionierung der Flanschelemente und der Laschen, die auch paarweise vorgesehen werden können, gelingt eine stabile Verbindung der genannten Teile. Die Laschen sind vorzugsweise auf der Aussenseite des Kabelkanals vorgesehen, so dass der Kanalquerschnitt für die Kabel freigehalten wird. Alternativ ist es hingegen auch möglich, die Laschen auf der Innenseite des Kabelkanals vorzusehen, beispielsweise, damit die Verbindungstechnik von aussen nicht sichtbar ist. Die Flanschelemente werden entsprechend gebogen bzw. mit einer Stufe versehen, so dass sie auf der Innenseite oder der Aussenseite des Kabelkanals geführt sind.

Lediglich in vorzugsweisen Ausgestaltungen weisen die Flanschelemente und/oder die Laschen wenigstens ein Rastelement auf, mittels dessen die ineinander verschobenen Flanschelemente und Laschen formschlüssig miteinander verbindbar sind. Die Rastelemente können praktisch ohne Mehraufwand beispielsweise beim Prägen der Winkelsegmente realisiert werden. Die Rastverbindung erfolgt automatisch beim Einschieben der Flanschelemente, die in der Folge beispielsweise mittels eines Schraubendrehers wieder gelöst werden können.

Alternativ werden die Verbindungen nach dem Ineinanderschieben der Teile, beispielsweise durch Nieten, Toxen oder Schweissen, gesichert.

Die beiden Anschlussteile, die beiden Winkelelemente und das Mittelteil können daher ineinander verschoben und durch Rastverbindungen automatisch gesichert werden. Auf Schrauben oder Arretiertelemente kann vorteilhaft verzichtet werden. Die Flanschelemente können beispielsweise auch je durch zwei Laschen hindurch geschoben werden, die voneinander beabstandet sind. Auf diese Weise erfolgt eine noch stabiler Verbindung zwischen den Elementen.

Die Laschen können besonders einfach in die Seitenwände und/oder das Bodenteil der Anschlussteile, des Mittelteils aber auch in Kabelbahnelemente integriert, bzw. daraus ausgeschnitten und ausgeformt werden. Kabelbahnelemente, die geschnitten werden, um Anschlussteile und Mittelteile zu produzieren, verfügen daher automatisch über die gewünschten Laschen. Die Laschen können in Kabelbahnelementen daher generell vorgesehen werden, auch wenn sie nicht durchweg zum Einsatz gelangen. Unbenutzte Laschen treten nicht störend in Erscheinung.

Die Verbindung der Teile des Winkelelements kann derart einfach erfolgen, dass die Winkelelemente gestapelt zum Installationsort transportiert und erst dort zusammengesetzt werden können. Auf diese Weise können die Winkelelemente raumsparend gelagert und transportiert werden.

Das erfindungsgemässe Winkelelement kann daher in wenigen Prozessstufen mit einfachen Werkzeugen und somit mit minimalem Aufwand hergestellt werden, wobei Anpassungen an Wünsche des Anwenders praktisch ohne Mehraufwand realisiert werden können. Insbesondere können in den Winkelelementen Öffnungen vorgesehen werden, durch die Kabel in die Kabelbahn hinein geführt werden können.

Das Bodenteil und die Seitenwände der Anschlussteile und des Mittelteils sind vorzugsweise mit Längsöffnungen versehen, durch die eine Belüftung der Kabel auch im Winkelelement sichergestellt ist. Ferner können die Öffnungen auch zur Verbindung mit benachbarten Kanalteilen verwendet werden. Beispielsweise werden Schrauben durch die Längsöffnungen und durch die genannten Flanschelemente hindurch geführt.

Obwohl durch den Einbau von Kabelschwellen, die vorzugsweise auch in den Anschlussteilen und in Mittelteil vorgesehen sind, bereits ein guter Kabelschutz erzielt werden kann, wird in vorzugsweisen Ausgestaltungen vorgesehen, dass die radial innenliegenden Seitenwände der Winkelsegmente sowie die dazwischen liegende Seitenwand des Mittelteils durch einen Kurvenkörper ganz oder teilweise überdeckt werden. Der Kurvenkörper weist eine gerundete Aussenseite auf, die dem Innenraum des Winkelelements zugewandt ist. Kabel, das im Bereich eines Winkelelements entlang der radial innen liegenden Seitenwand der Kabelbahn gezogen wird, wird somit materialschonend über die gerundete Aussenseite des Kurvenkörpers geführt.

Vorzugsweise wird vorgesehen, dass die Aussenseite des Kurvenkörpers gegenüber dem Bodenteil des Mittelteils und der Winkelsegmente vorzugsweise um einen Winkel im Bereich zwischen 80° und 90° nach innen geneigt ist. Dadurch wird verhindert, dass sich ein Kabel beim Nachziehen entlang der Seitenwand nach oben verschieben kann.

Durch den entsprechend dimensionierten Kurvenkörper wird vorzugsweise auch sichergestellt, dass ein für die Kabel minimal vorgesehener Biegeradius nicht unterschritten wird.

In einer bevorzugten Ausgestaltung ist der Kurvenkörper mit wenigstens einem Rollelement versehen, das dem Innenraum des Winkelelements zugewandt ist und das vorzugsweise in einer Ausnehmung innerhalb des Kurvenkörpers drehbar gelagert ist. Mittels dieser Rollelemente kann das in die Kabelbahn eingelegte Kabel praktisch widerstandslos und schonend um Kurven gezogen werden. Die Rollelemente können vorteilhaft in den vorzugsweise aus Kunststoff gefertigten Kurvenkörper integriert werden.

Nachfolgend wird die Erfindung anhand von Zeichnungen näher erläutert. Dabei zeigt:
- Fig. 1: ein erfindungsgemässes Winkelelement 1 mit zwei senkrecht zueinander ausgerichteten identischen Anschlussteilen 11A, 11B, die je durch eines von zwei identischen Winkelsegmenten 12A, 12B mit einem zugewandten Endstück eines Mittelteils 11C verbunden sind, welches wie die beiden Anschlussteile 11A, 11B, mit in einer Ebene senkrecht zur Längsachse verlaufenden Schnitten zum Beispiel von einem Kabelbahnelement 21, wie es in Figur 4 gezeigt ist, abgetrennt wurden;
- Fig. 2: das erste Anschlussteil 11A, das erste Winkelelement 12A und das Mittelteil 11C des Winkelelements 1 von Figur 1 teilweise voneinander gelöst;
- Fig. 2a: das erste Winkelelement 12A von Figur 2 mit beidseitig daran vorgesehenen Flanschelementen oder Zungen 1211, 1221, 1231 die in Laschen 1111, 1121 einschiebbar sind, die am ersten Anschlussteil 11A und am Mittelteil 11C befestigt oder daraus ausgeschnitten und ausgeformt wurden;
- Fig. 3: ein Winkelsegment 12 mit einem Bodenteil 122, das eingangsseitig und ausgangsseitig mit wellenförmigen Kabelschwellen 1229 versehen ist, und mit einer radial innenliegenden Seitenwand 123, die eingangsseitig und ausgangsseitig mit wellenförmigen Kabelschwellen 1239 versehen ist;
- Fig. 4: eine erfindungsgemässe Kabelbahn 2 mit dem Winkelelement 1 von Figur 1 und einem daran angeschlossenen Kabelbahnelement 21;
- Fig. 5: ein mit einer gerundeten Aussenseite 59 versehener Kurvenkörper 5, der in das Winkelelement 1 eingesetzt wird, um die radial innenliegenden Seitenwände 123 der beiden Winkelsegmente 12A, 12B und die dazwischen liegende Seitenwand 111 des Mittelteils 11C abzudecken und das in die Kabelbahn 2 eingelegte Kabel 9 beim Nachziehen entlang der Aussenseite 59 zu führen;
- Fig. 6a: die radial innenliegende Seitenwand 111 des Mittelteils 11C von Figur 1, die mit einer Längslochung 115 versehen ist;
- Fig. 6b: die radial innenliegende Seitenwand 111 des Mittelteils 11C von Figur 6a mit einem daran anliegenden Kurvenkörper 5, der entlang der in Figur 5 gezeigten Linie A-A geschnitten ist; und
- Fig. 6c: die radial innenliegende Seitenwand 111 des Mittelteils 11C von Figur 6a mit einem daran anliegenden Kurvenkörper 5, der mit Rollelementen 6 versehen ist, wird die das Kabel 9 ohne Reibungswiderstand gezogen werden kann.

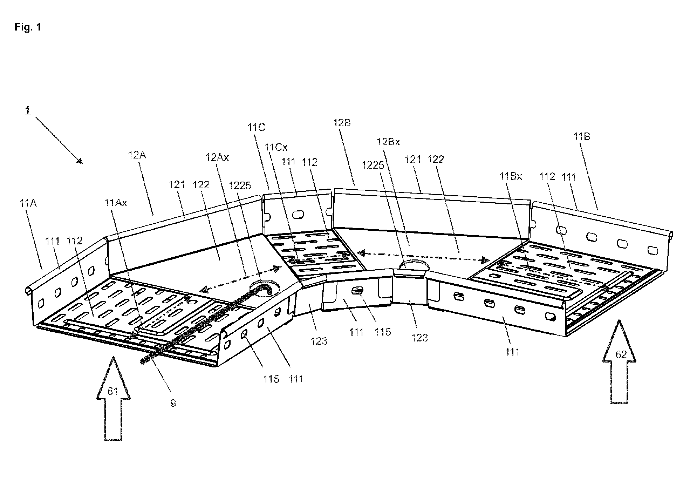

Figur 1 zeigt ein erfindungsgemässes Winkelelement 1 mit zwei senkrecht zueinander ausgerichteten Anschlussteilen 11A, 11B, die durch Winkelsegmente 12A, 12B je mit einem zugewandten Endstück eines Mittelteils 11C verbunden sind.

Die beiden identischen Anschlussteile 11A, 11B, das Mittelteil 11C und die beiden identischen Kabelbahnsegmente 12A, 12B weisen je ein Bodenteil 112 bzw. 122 und Seitenwände 111 bzw. 121 und 123 auf. Das Bodenteil 112 und die Seitenwände 111 der Anschlussteile 11A, 11B und des Mittelteils 11C sind mit Längsöffnungen 115 versehen, die der Belüftung eingelegter Kabel dienen und die auch für die Aufnahme von Verbindungselementen verwendbar sind.

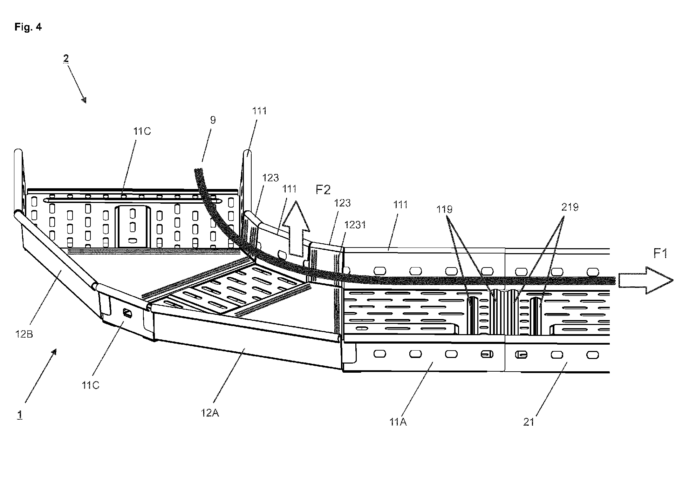

Die beiden Anschlussteile 11A, 11B und das Mittelteil 11C wurden durch in einer Ebene senkrecht zur Längsachse verlaufende Schnitte beispielsweise von einem Kabelbahnelement 21 abgetrennt, wie es in Figur 4 gezeigt ist. Es ist exemplarisch gezeigt, dass ein kürzeres Kabelbahnelement 21 durch zwei Schnitte und somit mit minimalem Aufwand in die drei Teile 11A, 11B und 11C aufgetrennt werden kann. In Figur 1 sind für die Anschlussteile 11A, 11B, das Mittelteil 11C und die beiden Kabelbahnsegmente 12A, 12B die Längsachsen 11Ax, 11Bx, 11Cx, 12Ax und 12Bx eingezeichnet, senkrecht zu denen die Schnitte ausgeführt wurden.

Die beiden Winkelsegmente 12A, 12B sind identisch ausgestaltet, weshalb sich der Fertigungsaufwand auch hier entsprechend reduziert hat. Wie bereits erwähnt, wird eine Abwicklung aus einem Blechteil ausgeschnitten und entsprechend geformt.

Figur 1 zeigt ferner, dass das Winkelelement 1 vorzugsweise derart installiert wird, dass die beiden Anschlussteile 11A und 11B beispielsweise auf Auslegern, wie sie aus [1] bekannt sind, abgelegt werden. Die Unterseite der beiden Winkelelemente 12A, 12B liegt daher frei, so dass in deren Bodenteil 122, gegebenenfalls auch den Seitenwänden 121, 123, vorteilhaft Öffnungen 1225 vorgesehen werden können, durch die Kabel 9 in den Kabelkanal eingeführt oder daraus entfernt werden kann. Das Einführen oder Ausführen von Kabel 9 im Winkelbereich ist besonders vorteilhaft, weil das Kabel 9 in der Folge gut geschützt entlang der Ecke nach oben oder nach unten geführt werden kann.

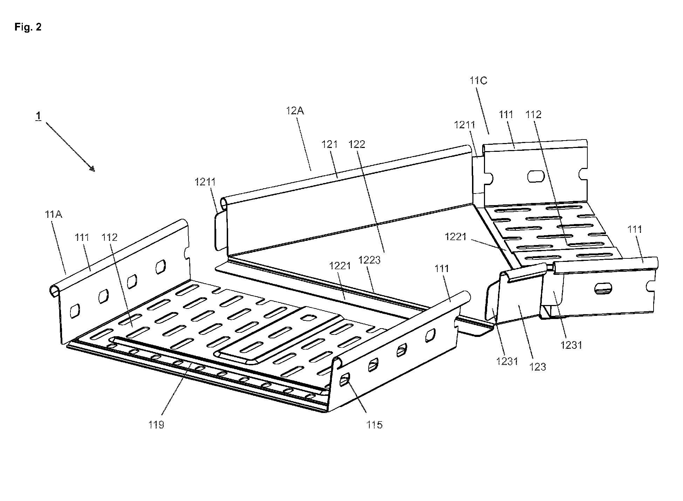

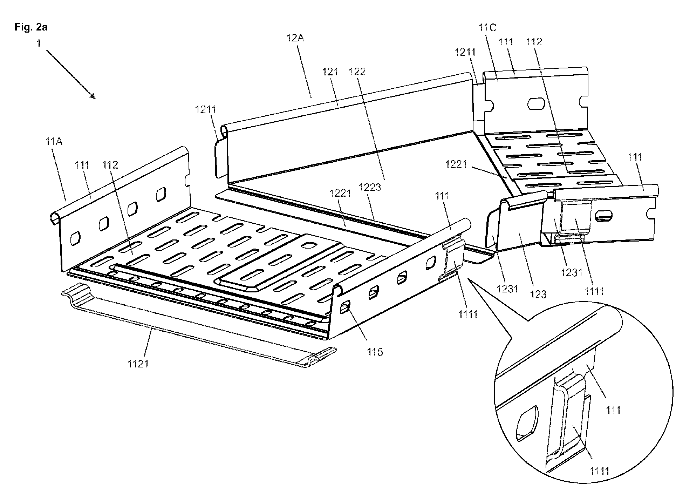

Figur 2 zeigt das erste Anschlussteil 11A, das erste Winkelsegment 12A und das Mittelteil 11C des Winkelelements 1 von Figur 1 teilweise voneinander gelöst. Es ist ersichtlich, dass das erste Anschlussteil 11A und das Mittelteil 11C von mit einem Schnitt in einer Ebene senkrecht zur Längsachse von einem Kabelbahnelement abgetrennt wurden. Beim vorliegenden Winkelelement 1 wurden das erste Anschlussteil 11A und das Mittelteil 11C durch einen Schnitt voneinander getrennt, wie die zueinander korrespondierenden Längslochungen zeigen, die zweigeteilt wurden. Es ist weiter ersichtlich, dass das erste Anschlussteil 11A und das Mittelteil 11C nicht weiter bearbeitet sind und somit mit minimalem Aufwand bereitgestellt werden können. Das erste Winkelsegment 12A hingegen ist mit einfachen Verbindungselementen versehen. Eingangsseitig und ausgangsseitig sind am Bodenteil 122 und den Seitenwänden 121, 123 einstückig damit verbundene Flanschelemente 1221, 1211 bzw. 1231 vorgesehen. Die Flanschelemente 1211, 1221 und 1231 können in einfachste Weise in die Abwicklung integriert werden. Beim Ausschneiden der Abwicklung mit den Flanschelementen 1211, 1221 und 1231, zum Beispiel mittels eines Laserstrahls oder eines Wasserstrahls, resultiert kein Mehraufwand. Nach dem Biegen der Seitenwände 121, 123 und gegebenenfalls der Flanschelemente 1211, 1221 und 1231 können die beiden Winkelelemente 12A, 12B in das zugehörige Anschlussteil 11A bzw. 11B und das Mittelteil 11C verschoben werden. In der Folge können die Flanschelemente 1211, 1221 und 1231 der beiden Winkelelemente 12A, 12B beliebige Weise mit den Seitenwänden 111 und/oder dem Bodenteil 112 verbunden werden. Die Flanschelemente 1211, 1221 und 1231 können beispielsweise durch Toxen, Verschrauben, Nieten oder Schweissen mit den betreffenden Elementen der Anschlussteile 11A, 11B und des Mittelteils 11C verbunden werden. Beispielsweise werden die Flanschelemente 1211, 1221 und 1231 mit Öffnungen versehen, durch die hindurch Verbindungselemente, wie Schrauben, Nieten oder Riegel, geführt werden. Vorzugsweise werden Öffnungen, Kreisöffnungen oder Längsöffnungen, in den Flanschelementen 1211, 1221 und 1231 vorgesehen, welche entsprechende Öffnungen, Kreisöffnungen oder Längsöffnungen, im Anschlussteil 11A, 11B und im Mittelteil 11C überlappen. Durch das Einsetzen von Bolzen, Schrauben oder Nieten können die Verbindungen somit rasch realisiert werden.

Figur 2a zeigt das erste Winkelelement 12A von Figur 2 mit beidseitig daran vorgesehenen Flanschelementen 1211, 1221, 1231 die in Laschen 1111, 1121 einschiebbar sind, die am ersten Anschlussteil 11A und am Mittelteil 11C vorgesehen sind. Die Laschen 1111, 1121 können an den Seitenwänden 111 und/oder dem Bodenteil befestigt werden oder können einstückig damit verbunden sein. Wie die Detaildarstellung in Figur 2a zeigt können die Laschen 1111, 1121 beispielsweise durch zwei Schnitte freigelegt und anschliessend nach aussen geformt bzw. gebogen werden. Die beiden Winkelelemente 12A, 12B und die beiden Anschlussteile 11A, 11B sowie das Mittelteil 11C können daher in einfacher Weise ineinander verschoben werden. Nach dem Ineinanderschieben können die Flanschelemente 1211, 1221, 1231 beispielsweise durch Schrauben oder Bolzen in den Laschen 1111, 1121 fixiert werden.

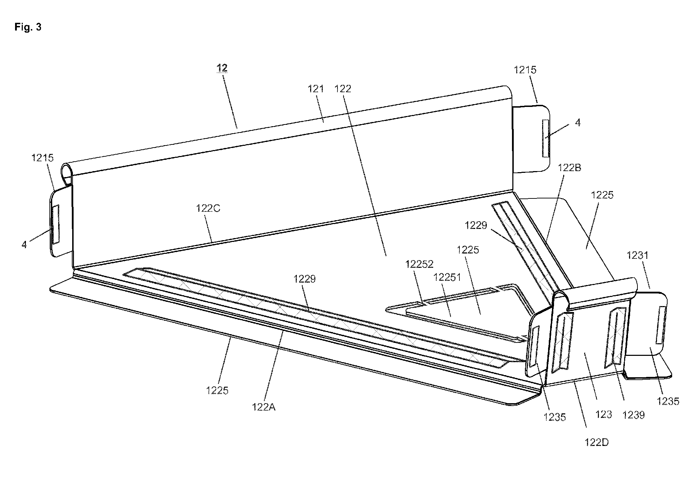

In bevorzugter Ausgestaltungen hingegen, sind die Laschen 1111, 1121 und oder die Flanschelemente 1211, 1221, 1231 mit Rastelementen 4 (siehe Figur 3) versehen werden, so dass sie nach dem ineinander Verschieben der Winkelelemente 12A, 12B, der beiden Anschlussteile 11A, 11B sowie des Mittelteils 11C Einrasten und fest miteinander verbunden sind.

Figur 3 zeigt ein Winkelsegment 12 in einer vorzugsweisen Ausgestaltung mit Kabelschwellen 1229, 1239, die eingangsseitig und ausgangsseitig am Bodenteil 122 und an der radial innenliegenden kleineren Seitenwand 123 vorgesehen sind. Mittels dieser Kabelschwellen 1229, 1239 die vorzugsweise wellenförmig ausgestaltet sind, wird in der Kabelbahn gelagertes Kabel im Übergangsbereich zwischen dem Winkelsegment 12 und dem zugehörigen ersten oder zweiten Anschlussteil 11A, 11B und dem Mittelteil 11C in einem Abstand vom Bodenteil 122 und von der Seitenwand 123 gehalten, welcher sicherstellt, dass das Kabel nicht in Kontakt mit einer Kante geraten kann. Das Winkelsegment 12 kann daher mit den Verbindungsfunktionen bzw. den Flanschelementen 1211, 1221 und 1231 und den Schutzfunktionen bzw. den Kabelschwellen 1229, 1239 in einem Stück effizient gefertigt werden. Die Bearbeitung des Winkelelements 12 kann mit einfachen Biegevorgängen und einfachen Prägevorgängen innerhalb kürzester Zeit erfolgen.

In Figur 3 ist ferner gezeigt, dass im Bodenteil 122 eine Öffnung 1225 freigelegt werden kann, indem ein Bodenelement 12251 ausgeschnitten wird. Das Bodenelement 12251 ist bereits weitgehend ausgeschnitten und nur noch durch wenige Stege 12252 mit dem restlichen Bodenteil 122 verbunden. Durch Auftrennung der Stege 12252 kann das Bodenelement 12251 vollständig freigelegt und entfernt werden. Zum Schutz der durch die Öffnung 1225 hindurch geführten Kabel 9 kann in der Folge ein Kunststoffring eingesetzt werden.

Figur 4 zeigt eine erfindungsgemässe Kabelbahn 2 mit dem Winkelelement 1 von Figur 3 und einem Kabelbahnelement 21, das mit dem ersten Anschlussteil 11A des Winkelelements 1 verbunden ist. An den einander zugewandten Enden des Anschlussteils 11A und des Kabelbahnelements 21 sind Kabelschwellen 119, 219 vorgesehen, welche einen schonenden Übergang des Kabels 9 gewährleisten. An der radial innenliegenden mehrteiligen Seitenwand 111-123-111-123-111 des Winkelelements 1 sind ebenfalls Kabelschwellen 1239 vorgesehen, die in die radial innenliegenden Seitenwände 123 der beiden Winkelsegmente 12A, 12B eingeprägt sind.

Es ist ersichtlich, dass durch die gegeneinander abgewinkelten Seitenwände 111, 123, 111, 123, 111 der Anschlussteile 11A, 11B; der Winkelsegmente 12A, 12B und des Mittelstücks 11C eine bereits stark gerundete radial innenliegende Seitenwand 111-123-111-123-111 geschaffen wurde, welche zusätzlich mit den Kabelschwellen 1231 das Kabel 9 schonend hält und führt, wenn es entlang der Kabelbahn 2 gezogen wird.

Durch zylindrisches Abrunden der radial innenliegenden Seitenwände 123 der beiden Winkelsegmente 12A, 12B kann die innen liegende Seitenwand 111-123-111-123-111 des Winkelelements 1 vollständig abgerundet werden, so dass jegliche Kantenbildung vermieden wird.

Zu beachten ist jedoch, dass bei Ausübung einer Zugkraft auf das Kabel 9 nicht nur eine Bewegung in Längsrichtung erfolgt. Sobald eine Zugkraft F1 auf das Kabel 9 ausgeübt wird, resultiert aufgrund der Neigung der Seitenwände 123, 111, 123 im Kurvenbereich eine Kraft F2, welche das Kabel 9 entlang einer schiefen Ebene nach oben führt. Um diesem Effekt entgegen zu wirken, werden die Kabelschwellen 1239 oben vorzugsweise grösser ausgebildet als unten. Die Neigung der Seitenwände 111, 123, 111, 123, 111 wird daher durch die Kabelschwellen 1239 kompensiert, die somit das Kabel 9 nicht nur schonend führen, sondern auch verhindern, dass das Kabel 9 nach oben gleiten kann.

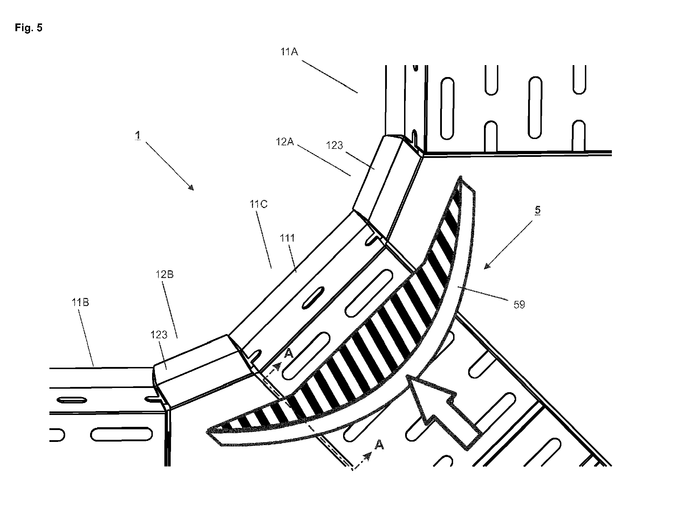

Figur 5 zeigt einen mit einer gerundeten Aussenseite 59 versehenen Kurvenkörper 5, der in das Winkelelement 1 eingesetzt wird, um die radial innenliegenden Seitenwände 123 der beiden Winkelsegmente 12A, 12B und die dazwischen liegende Seitenwand 111 des Mittelteils 11C abzudecken. In die Kabelbahn 2 eingelegtes Kabel 9 wird beim Nachziehen daher entlang der Aussenseite 59 des Kurvenkörpers 5 geführt. Kurvenkörper 5 aus Kunststoff können beispielsweise mittels Extrusionsverfahren kostengünstig gefertigt werden. Dabei wird vorgesehen, dass die Aussenseite 59 der Kurvenkörper 5 senkrecht oder leicht geneigt zum Boden der Kabelbahn 2 bzw. des Winkelelements 1 ausgerichtet ist. Weiterhin können in die Aussenseite 59 eines Kurvenelements 5 auch Rinnen eingefügt werden, welche ein Kabel 9 erfassen, halten und führen können.

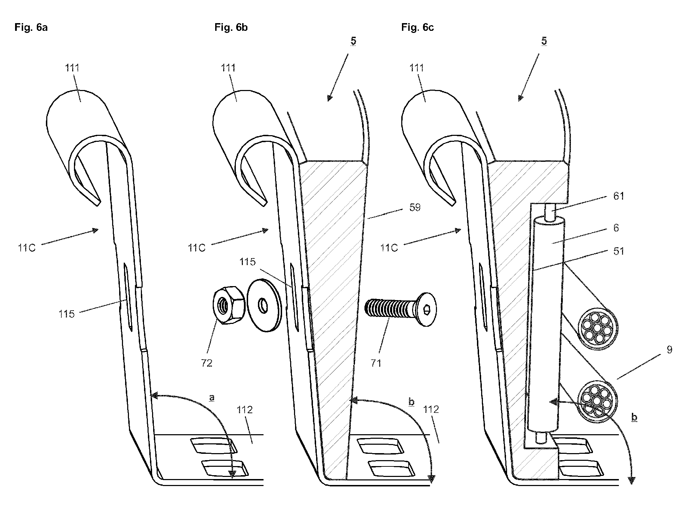

Figur 6a zeigt die radial innenliegende Seitenwand 111 des Mittelteils 11C von Figur 1, die mit einer Längslochung 115 versehen ist. Die Seitenwand 111, deren oberes Ende nach aussen gerollt ist, schliesst mit dem Bodenteil 112 einen Winkel a ein, der etwas grösser als 90° ist und beispielsweise in einem Bereich zwischen 90° und 100° liegt.

Figur 6b zeigt die radial innenliegende Seitenwand 111 des Mittelteils 11C von Figur 6a mit einem daran anliegenden Kurvenkörper 5, der entlang der in Figur 5 gezeigten Linie A-A geschnitten ist. Der Kurvenkörper 5 wird beispielsweise mittels einer Schraube 71, die durch eine Öffnung 115 in der Seitenwand 111 geführt wird, und durch eine Schraubenmutter 72, die vorzugsweise an einer Unterlagscheibe anliegt, montiert. Beispielsweise wird die Schraubenmutter 72 mit der Unterlagscheibe in einer Ausnehmung im Kurvenkörper 5 versenkt. Die der Innenseite des Winkelelements 1 zugewandte Aussenseite 59 des Kurvenkörpers 5 schliesst mit dem Bodenteil 112 einen Winkel b ein, der etwas kleiner als 90° ist und beispielsweise in einem Bereich zwischen 80° und 90° liegt. Beim Nachziehen der Kabel 9 wird daher verhindert, dass dieses entlang der Seitenwand 111 nach oben gleiten und aus dem Kabelkanal 2 entweichen kann.

Figur 6c zeigt die radial innenliegende Seitenwand 111 des Mittelteils 11C von Figur 6a mit einem daran anliegenden Kurvenkörper 5, der mit Rollelementen 6 versehen ist, über die das Kabel 9 ohne Reibungswiderstand führbar ist. Der Kurvenkörper 5 weist eine Ausnehmung 51 auf, in dem eine Welle 61 gehalten ist, die eine langgestreckte Rolle 6 oder Walze drehbar hält. Kurvenkörper 5 aus Kunststoff, die mit einer Ausnehmung 51 versehen sind, können wiederum mit wenig Aufwand gefertigt werden. Durch Bohrungen im Kurvenkörper 5 können eine oder mehrere Wellen 61 leicht eingesetzt und durch die Rollen 6 hindurch geführt werden. Kabel 9 können daher nicht nur schonend sondern auch mit geringem Widerstand entlang der Kabelbahn 2 gezogen werden. Durch die Neigung der Rollen 6 gemäss dem Winkel b wird wiederum verhindert, dass sich die Kabel 9 beim Nachziehen nach oben verschieben.

Der Radius der gerundeten Aussenseite 59 des Kurvenkörpers 5 ist vorzugsweise derart gewählt, dass ein für die Kabel 9 vorgeschriebener minimaler Biegeradius nicht unterschritten wird. Die Kabel 9 werden daher schonend verschoben, ohne dass Beschädigungen am Kabelmantel oder Knickstellen auftreten.

Die Kurvenkörper 5 der Figuren 6b und 6c können an die radial innenliegende Seitenwand beliebiger weiterer Eckelemente angepasst werden und sind somit nicht auf den Einsatz in erfindungsgemässen Eckeelementen beschränkt.

## Patentansprüche

1. Winkelelement (1) für eine Kabelbahn (2) mit zwei miteinander verbundenen und vorzugsweise senkrecht zueinander ausgerichteten ersten und zweiten Anschlussteilen (11A, 11B), die aus Blech gefertigte und durch ein Bodenteil (112) aus Metallblech oder Metallprofilen miteinander verbundene Seitenwände (111) aufweisen und die je mit einem anschliessenden Kabelbahnelement (21) der Kabelbahn (2) verbindbar sind, **dadurch gekennzeichnet, dass** das erste Anschlussteil (11A) durch ein erstes Winkelsegment (12A) und das zweite Anschlussteil (11B) durch ein zweites Winkelsegment (12B) mit der zugewandten Seite eines Mittelteils (11C) verbunden ist, dass die beiden Anschlussteile (11A, 11B) und das Mittelteil (11C)
a) Kabelbahnsegmente mit zumindest annähernd gleichem Querschnitt und je einer zugehörigen Längsachse (11Ax, 11Bx, 11Cx) bilden und
b) eingangsseitig und ausgangsseitig senkrecht zur Längsachse (11Ax, 11Bx, 11Cx) geschnitten sind; und
dass die aus Blech gefertigten und zumindest annähernd identischen Winkelsegmente (12A, 12B) ein trapezförmiges Bodenteil (122) umfassen, das einen Teilwinkel von vorzugsweise 45° einschliessende Schenkelseiten (122A, 122B) und eine längere erste Grundseite (122C) und eine kürzere zweite Grundseite (122D) aufweisen, an die zugehörige Seitenwände (121, 123) einstückig anschliessen.

2. Winkelelement (1) nach Anspruch 1, **dadurch gekennzeichnet, dass** die Winkelsegmente (12A, 12B) Verbindungselemente (1215, 1225, 1235) vorzugsweise die Form von Flanschelementen aufweisen, die vorzugsweise beidseitig am Bodenteil (122) und/oder an den Seitenwänden (121, 123) vorgesehen und die mit dem zugehörigen ersten oder zweiten Anschlussteil (11A; 11B) und dem Mittelteil (11C) verbindbar sind.

3. Winkelelement (1) nach Anspruch 2, **dadurch gekennzeichnet,**
a) **dass** die Flanschelemente (1215, 1225, 1235) das Bodenteil (112) und/oder die Seitenwände (111) des zugehörigen ersten oder zweiten Anschlussteils (11A; 11B) und des Mittelteils (11C) innenseitig oder aussenseitig überlappen und durch Schweissen, Nieten, Toxen oder Schrauben mit diesen verbunden sind; oder
b) **dass** die Flanschelemente (1215, 1225, 1235) in Laschen (1111, 1121), die am Bodenteil (112) und/oder den Seitenwänden (111) des zugehörigen ersten oder zweiten Anschlussteils (11A; 11B) bzw. des Mittelteils (11C) vorgesehen sind, einschiebbar bzw. darin gehalten sind.

4. Winkelelement (1) nach Anspruch 3, **dadurch gekennzeichnet, dass** die Laschen (1111, 1121) am Bodenteil (112) und/oder den Seitenwänden (111) des zugehörigen ersten oder zweiten Anschlussteils (11A; 11B) bzw. des Mittelteils (11C) ausgeschnitten und ausgebogen oder damit verbunden sind und dass die Flanschelemente (1215, 1225, 1235) in den Laschen (1111, 1121)
a) ungesichert gehalten sind; oder
b) durch Arretierelemente, wie Bolzen, gehalten sind; oder
c) durch Rastelemente (4) gehalten sind, die vorzugsweise in die Flanschelemente (1215, 1225, 1235) eingearbeitet sind.

5. Winkelelement (1) nach einem der Ansprüche 1 - 4, **dadurch gekennzeichnet, dass** zumindest die an die kürzere zweite Grundseite (122D) anschliessende Seitenwand (123) der Winkelsegmente (12A, 12B) gerundet ist und vorzugsweise ein Zylindersegment bildet.

6. Winkelelement (1) nach einem der Ansprüche 1-5, **dadurch gekennzeichnet,**
a) **dass** das Bodenteil (122) und/oder zumindest die an die kürzere zweite Grundseite (122D) anschliessende Seitenwand (123) der Winkelsegmente (12A, 12B) eingangsseitig und/oder ausgangsseitig mit Kabelschwellen (1229) versehen sind und/oder
b) **dass** das Bodenteil (122) und/oder eine der Seitenwände (121, 123) der Winkelsegmente (12A, 12B) mit wenigstens einer Öffnung (1225) oder mit wenigstens einem Abdeckelement (12251) versehen ist, welches gelöst werden kann, um eine Öffnung (1225) freizulegen.

7. Winkelelement (1) nach einem der Ansprüche 1-6, **dadurch gekennzeichnet, dass** das Bodenteil (112) und/oder die Seitenwände (111) des ersten und zweiten Anschlussteils (11A, 11B) und des Mittelteils (11C) mit Längsöffnungen (115) versehen sind und/oder dass das erste und das zweite Anschlussteil (11A, 11B) eingangsseitig mit einer Kabelschwelle (119) versehen ist.

8. Winkelelement (1) nach einem der Ansprüche 1-7, **dadurch gekennzeichnet, dass** die Seitenwände (111) des ersten und zweiten Anschlussteils (11A, 11B) und des Mittelteils (11C) und die Seitenwände (121, 123) der Winkelsegmente (12A, 12B) gegenüber dem zugehörigen Bodenteil (112; 122) vorzugsweise um einen Winkel (a) in einem Bereich zwischen 90° und 100° nach aussen geneigt sind.

9. Winkelelement (1) nach einem der Ansprüche 1-8, **dadurch gekennzeichnet, dass** die an die kürzere zweite Grundseite (122D) anschliessende Seitenwand (123) jedes Winkelsegments (12A, 12B) sowie die dazwischen liegende Seitenwand (111) des Mittelteils (11C) durch einen Kurvenkörper (5) ganz oder teilweise überdeckt sind, der eine gerundete Aussenseite (59) aufweist, die dem Innenraum des Winkelelements (1) zugewandt ist.

10. Winkelelement (1) nach Anspruch 9, **dadurch gekennzeichnet, dass** die Aussenseite (59) des Kurvenkörpers (5) gegenüber dem Bodenteil (112; 122) des Mittelteils (11C) und der Winkelsegmente (12A, 12B) vorzugsweise um einen Winkel (b) in einem Bereich zwischen 80° und 90° nach innen geneigt ist.

11. Winkelelement (1) nach Anspruch 9 oder 10, **dadurch gekennzeichnet, dass** der Kurvenkörper (5) mit wenigstens einem Rollelement (6) versehen ist, das dem Innenraum des Winkelelements (1) zugewandt ist und das vorzugsweise in einer Ausnehmung (51) innerhalb des Kurvenkörpers (5) drehbar gelagert ist.

12. Winkelelement (1) nach einem der Ansprüche 1-11, **dadurch gekennzeichnet, dass** der Radius der Aussenseite (59) des Kurvenkörpers derart gewählt ist, dass eine für die Kabel (9) vorgeschriebener Biegeradius nicht unterschritten wird.

13. Winkelelement (1) nach einem der Ansprüche 1-12, **dadurch gekennzeichnet, dass** erste und zweite Anschlussteil (11A, 11B) und des Mittelteil (11C) vom gleichen Bahnelement oder von identischen Bahnelementen abgeschnitten sind.

14. Kabelbahn (2) mit wenigstens einem Winkelelement (1) nach einem der Ansprüche 1-13 und wenigstens einem auf einer Seite oder auf beiden Seiten an das Winkelelement (1) anschliessenden Kabelbahnelement (21).

15. Kabelbahn (2) nach Anspruch 14, **dadurch gekennzeichnet, dass** die Kabelbahnelemente (21) und die beiden Anschlussteile (11A, 11B) sowie das Mittelteil (11C) des Winkelelements (1) zumindest annähernd identisch ausgestaltet sind.
